# NEUE EUROPÄISCHE PATENTSCHRIFT

(11) **EP 1 431 575 B2**
(45) Veröffentlichungstag und Bekanntmachung des Hinweises auf die Entscheidung über den Einspruch: **30.05.2018**
(45) Hinweis auf die Patenterteilung: 01.04.2015
(21) Anmeldenummer: 03027538.2
(22) Anmeldetag: 29.11.2003
(51) Int. Cl.: F03D 11/00, F03D 11/02, F16H 57/04, F16H 57/08

(54) **Planetengetriebe für eine Windkraftanlage**
Planetary transmission for wind turbine
Transmission planétaire pour éolienne

(30) Priorität: 19.12.2002 DE 10260132
(43) Veröffentlichungstag der Anmeldung: 23.06.2004
(73) Patentinhaber: Flender GmbH, 46395 Bocholt (DE)
(72) Erfinder: Hulshof, Frans, 7102 KD-Winterswijk (NL); Dinter, Ralf, Dr., 45888 Gelsenkirchen (DE); Jansen, Udo, 46397 Bocholt (DE)
(74) Vertreter: Maier, Daniel Oliver

(56) Entgegenhaltungen:
- WO-A1-91/19916
- WO-A1-03//078870
- WO-A2-01/57415
- DE-A1- 3 209 514
- DE-A1- 19 960 157
- GB-A- 585 930
- US-A- 3 821 908
- US-A1- 2002 049 108

## Beschreibung

Die Erfindung betrifft ein Planetengetriebe mit einer in einem Gehäuse umlaufenden Planetenstufe für eine mit einem Rotor versehene Windkraftanlage mit den Merkmalen des Oberbegriffes des Anspruches 1

Es sind Planetengetriebe und Planeten-Stirnradgetriebe für Windkraftanlagen bekannt, bei denen die Wälzlager der Planetenstufe dadurch geschmiert und gekühlt werden, dass sie periodisch in den im Getriebegehäuse befindlichen Ölsumpf eintauchen. Die hierbei in die Lager eindringende Ölmenge ist abhängig von mehreren Faktoren, wie die konstruktive Gestaltung des Aufnahmevolumens der Lagerung, die Schräglage der Längsachse des Getriebes, die Drehzahl des Planetenträgers, die Verweilzeit der Lager im Ölsumpf und andere. Ein wesentlicher Faktor ist auch die mit steigender Betriebstemperatur immer geringer werdende Viskosität des Schmieröls,woraus sich nur ein sehr dünner Schmierfilm auf den Schmierflächen ausbilden kann. Außerdem sind das maximale Ölstandsniveau in diesen Getrieben und damit die Eintauchtiefe der Planetenräder in dem Ölsumpf durch den vorhandenen Luftspalt der verwendeten rotorseitigen Labyrinthdichtungen begrenzt.

Eine weitere Variante der Schmierung der Planetenradlager ist ein Anspritzen der Lager von außen mittels Ringduschen oder lokalen Spritzstellen. Hierbei fördert eine Ölförderpumpe eine Druck behaftete definierte Ölmenge, vorzugsweise gekühlt und gefiltert, mittels Rohrleitungen, Düsen und Blenden aus dem Ölsumpf des Getriebegehäuses zu den Schmierstellen. Bei einem gattungsgemäßen, aus der DE 85 35 076 U bekannten Planetengetriebe erfolgt die Zuleitung des so geförderten Schmieröls zu den Schmierstellen über Bohrungen in dem Getriebegehäuse und dem Planetenträger und über einen mit Bohrungen und Ringnuten versehenen Ring, der fest in das Getriebegehäuse eingesetzt ist.

Die Lager der Planetenräder von einem in einer Windkraftanlage verwendeten Planetengetriebe sind durch die Platzverhältnisse innerhalb des Planetenträgers bezüglich ihres Tragevermögen begrenzt. Vor allem Wälzlager drehen bei den hohen Belastungen und den von dem Rotor der Windkraftanlage vorgegebenen geringen Drehzahlen um die eigene Achse oft im Mischreibungsgebiet und unterliegen dadurch einem milden Verschleiß. Der hierbei entstehende Abrieb in diesen Lagern, zusammen mit dem vorhandenen, noch nicht gefilterten Abrieb der Zahnräder unterstützen den Verschleiß der Kontaktflächen dieser Wälzlager und begrenzen so deren Gebrauchslebensdauer.

Je größer bei Windkraftanlagen die installierten Leistungen je Einheit werden, umso größer werden die Planetengetriebe und deren Plänetenradlager. Gleichzeitig drehen die Planetenträger mit den montierten Planetenrädern langsamer um die eigene Rotationsachse, wodurch die Verweilzeit dieser Lager außerhalb des Ölsumpfes zunimmt. Ebenso drehen die Planetenräder hierbei langsamer um die eigene Achse, so dass der Ölbedarf je Lager steigt. Bei dieser seitlichen Anspritzung von außen mittels Ringduschen oder lokalen Spritzstellen erreicht das Schmieröl nur die außen liegenden Rollen der oft zweireihigen Lager. Besonders bei Planetenträgern mit großen Seitenwangendurchmessern und mit vier oder mehr Planetenrädern sind damit die Planetenradlager für das von außen anspritzte Schmieröl nur schwer zugänglich.

Bei einem aus der US-A-3 821 908 bekannten Planetengetriebe werden die Lager der Planetenachsen dadurch mit Schmieröl versorgt, dass das Schmieröl durch einen Spalt zwischen zwei rotierenden Wellen zugeführt wird. Das Schmieröl tritt durch radiale Kanäle in einer der Wellen und im Planetenträger und wird anschließend in eine Aufweitung im Planetenträger eingesprüht. Unter der Wirkung der Zentrifugalkraft des rotierenden Planetenträgers gelangt das Schmieröl durch Kanäle in den Achsen der Planetenräder zu deren Lager. Das Schmieröl kann aber nur dann zu den Lagerstellen transportiert werden, wenn ausreichend Zentrifugalkraft ansteht, weshalb der Planetenträger schnell drehen muss. Bei geringen Drehzahlen geht der größte Teil des angebotenen Schmieröles durch die Schwerkraft und durch die Fließwiderstände in den Kanälen verloren.

Der Erfindung liegt die Aufgabe zugrunde, das gattungsgämäße, für eine Windkraftanlage vorgesehene Planetengetriebe derart zu gestalten, dass die Planetenradlager während des Betriebes permanent mit einer ausreichenden und bestimmbaren Menge an Schmieröl versorgt werden können.

Die Aufgabe wird bei einem gattungsgemäßen Getriebe erfindungsgemäß durch die kennzeichnenden Merkmale des Anspruches 1 gelöst. Vorteilhafte Ausgestaltungen der Erfindung sind Gegenstand der Unteransprüche.

Dadurch, dass die Achsen der Planetenräder mit Ölführungskanälen versehen sind, die an den Öldurchlauf durch das Getriebe angeschlossen sind, wird in den Planetenradlagern 9 eine Durchströmungsrichtung des Schmieröls mit einer Zwangsführung erreicht. Durch diese Zwangsführung bekommen alle Rollenreihen auch von mehrreihigen Lagern genügend Schmieröl zur Schmierung zugeführt. Das die Lager durchströmende Schmieröl spült auch eventuell vorhandene Abriebpartikel aufgrund des Lagerverschleisses und der Reibung bei den Zahneingriffen aus den Lagern fort. Es entsteht somit ein für Windkraftanlagen hervorragend geeignetes Planetengetriebe, das sich durch eine zwangsgeführte Schmierung der Planetenradlagerung und damit durch eine lange Betriebsdauer auszeichnet.

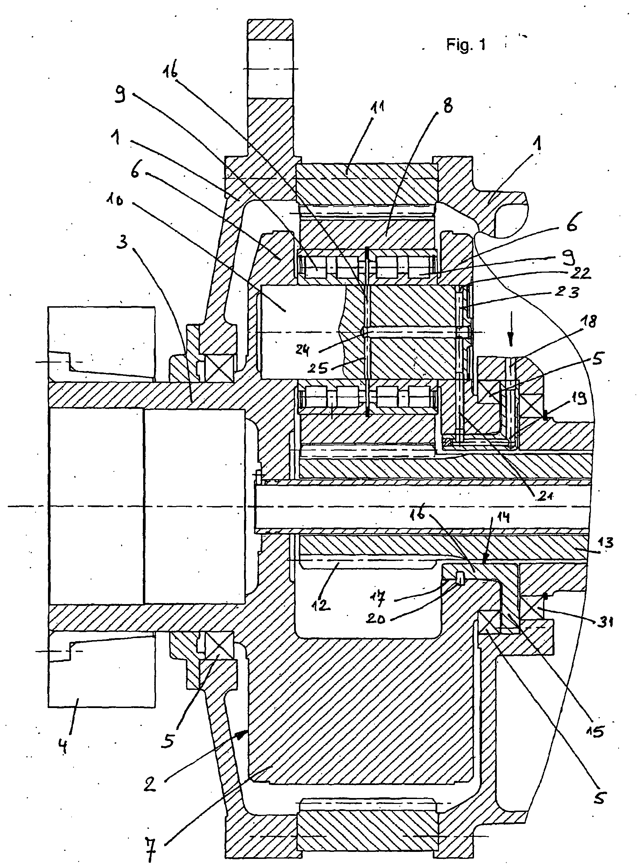

Mehrere Ausführungsbeispiele der Erfindung sind in der Zeichnung dargestellt und werden im Folgenden näher erläutert. Es zeigen
- Fig. 1: ausschnittsweise den Längsschnitt durch ein Planetengetriebe,
- Fig. 2: und 3 ausschnittsweise den Längsschnitt durch jeweils eine andere Ausführungsform des Planetengetriebes und
- Fig. 4: die Einzelheit Z nach Fig. 3 mit einer weiteren Ausführungsform.

Das dargestellte Planetengetriebe ist auf dem Turm einer nicht gezeigten Windkraftanlage angeordnet und dient zum Antrieb eines Generators durch einen Flügel tragenden Rotor. Das Getriebe ist in einem Getriebegehäuse 1 untergebracht und umfasst eine Planetenstufe als eine erste Übersetzungsstufe, die von dem Rotor angetrieben wird. An diese erste Übersetzungsstufe schließt sich eine zweite, als Stirnrad- oder als Planetenstufe ausgebildete Übersetzungsstufe an. Die dargestellte erste Planetenstufe des Getriebes umfasst einen Planetenträger 2, der über eine Hohlwelle 3 mittels einer Flanschverbindung oder eines Pressverbandes 4 mit der Rotorwelle des Rotors verbunden ist. Der Planetenträger 2 ist in dem Getriebegehäuse 1 in Lagern 5 drehbar gelagert ist und besteht aus zwei parallelen Seitenwangen 6, die durch Stege 7 miteinander verbunden sind.

In dem Planetenträger 2 sind mehrere Planetenräder 8 drehbar in Planetenradlagern 9 gelagert. Die Planetenradlager 9, die entweder als einreihige oder als zweireihige Wälzlager ausgebildet und in dem Planetenrad 8 angeordnet sind, stützen sich über eine Planetenachse 10 auf dem Planetenträger 2 ab. Die Planetenräder 8 stehen einerseits mit einem fest im Getriebegehäuse 1 angeordneten Hohlrad 11 und anderseits mit einem zentralen Sonnenrad 12 in Eingriff. Das Sonnenrad 12 ist auf einer Sonnenradwelle 13 befestigt und treibt mittels weiterer Übersetzungsstufen den Generator der Windkraftanlage an.

In dem Getriebegehäuse 1 ist fest ein Einsatzring 14 eingesetzt und konzentrisch zu der Rotationsachse des Planetenträgers 2 angeordnet. Der Einsatzring 14 ist L-förmig ausgebildet und weist einen radialen Schenkel 15 und einen axialen Schenkel 16 auf. Der axiale Schenkel 16 des Einsatzringes 14 steht der der Hohlwelle 3 des Planetengetriebes abgewandten Seitenwange 6 des Planetenträgers 2 gegenüber und bildet mit dieser einen definierten radialen Spalt 17. Der Spalt 17 stellt sicher, dass der Einsatzring 14 keine Lagerfunktion für den Planetenträger 2 übernehmen kann.

An das Getriebegehäuse 1 ist über eine außen verlegte, nicht gezeichnete Ölleitung eine Ölförderpumpe angeschlossen, die aus dem in dem Getriebegehäuse 1 befindlichen Ölsumpf Schmieröl ansaugt und es unter Druck nach einer Filtration und gegebenenfalls einer Kühlung in das Getriebegehäuse 1 zurück fördert. Die Ölleitung ist an einem Ölzulauf 18 angeschlossen, der als Bohrung koaxial zu dem radialen Schenkel 15 des Einsatzringes 14 durch das Getriebegehäuse 1 hindurchgeführt ist.

Der Ölzulauf 18 steht mit einem Ölführungskanal 19 in Verbindung, der als Bohrung durch den radialen und den axialen Schenkel 15, 16 des Einsatzringes 14 hindurchgeführt ist. Der Ölführungskanal 19 des Einsatzringes 14 endet in einer Ringnut 20, die an der Berührungsfläche zwischen den axialen Schenkel 16 des Einsatzringes 14 und einer radialen Stirnfläche der einen Seitenwange 6 des Planetenträger 2 in diese Seitenwange 6 und/oder den Einsatzring 14 eingeschnitten ist.

Die Ringnut 20 steht mit Ölführungskanälen 21 in Verbindung, die durch die eine Seitenwange 6 des Planetenträgers 2 bis zu den Achsen 10 der Planetenräder 8 hindurchgeführt sind. Die Anzahl der Ölführungskanäle 21 des Planetenträgers 2 entspricht der Anzahl der Planetenräder 8. Jeder Ölführungskanal 21 des Planetenträgers 2 setzt sich in eine Ringnut 22 fort, die in eine jede der Achsen 10 der Planetenräder 8 eingeschnitten ist. Die Ringnut 22 der Achse 10 steht mit Ölführungskanälen 23, 24, 25 in Verbindung, die durch die Achse 10 hindurchgeführt sind. Die Ölführungskanäle 23, 24, 25 bestehen aus einer ersten Gruppe von radialen Kanälen 23, die die Ringnut 22 am Umfang der Achse 10 mit einem beidseitig geschlossenen axialen Kanal 24 verbinden. Von dem axialen Kanal 24 geht eine zweite Gruppe von radialen Kanälen 25 aus. Die radialen Kanäle 25 enden offen zwischen den beiden Rollenreihen des zweireihigen Planetenradlagers 9.

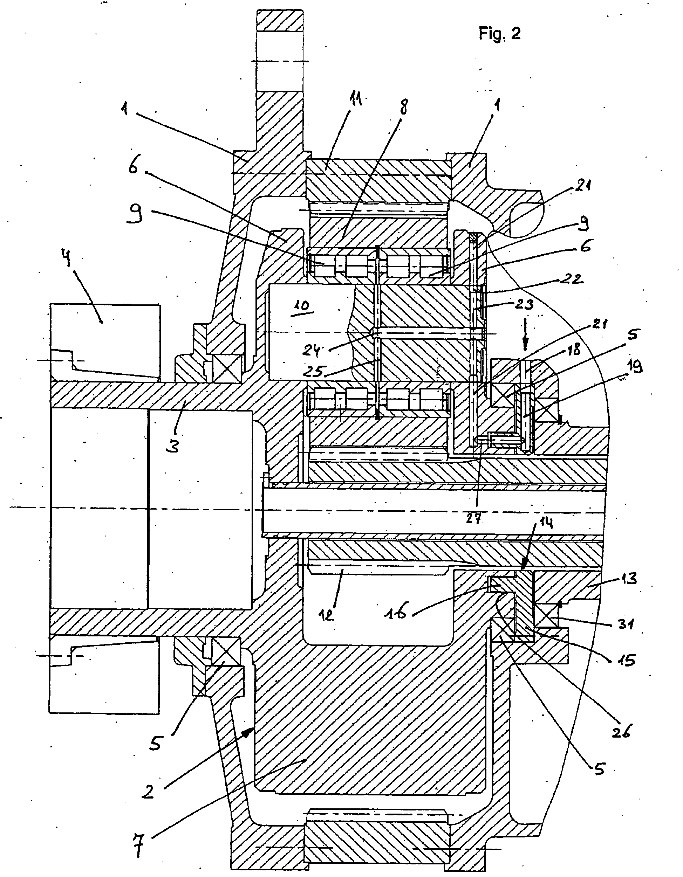

Bei der in Fig. 2 dargestellten Variante greift der axiale Schenkel 16 des Einsatzringes 14 in eine Freidrehung 26 in der Nabe des Planententrägers 2 ein. In der Verlängerung des axialen Schenkels 16 sind in die Nabe des Planetenträgers 2 axiale Bohrungen 27 angebracht, die den Ölführungskanal 19 des Einsatzringes 14 jeweils mittels einer Verteilernut, die bei entsprechender Länge des axialen Schenkels 16 entsteht, mit einem der Ölführungskanäle 21 des Planetenträgers 2 verbinden.

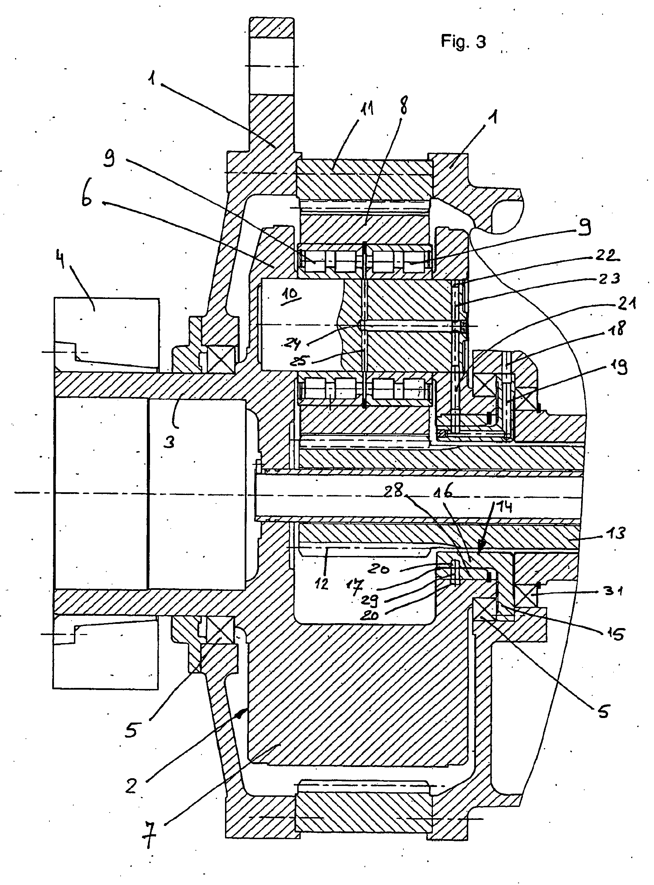

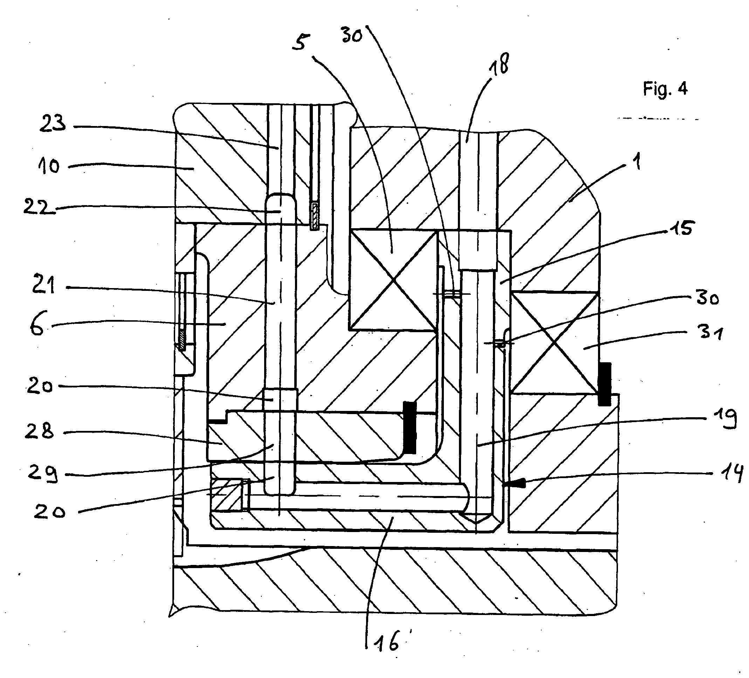

Bei der in Fig. 3 und 4 gezeigten Variante ist in dem Planetenträger 2 auf der dem axialen Schenkel 16 des Einsatzringes 14 zugewandten Seite eine Lagerbuchse 28 vorzugsweise aus Bronze eingebracht. Die Lagerbuchse 28 ist fest mit dem Planetenträger 2 verbunden. Die Lagerbuchse 28 ist mit einer oder mehreren radialen Bohrungen 29 versehen, die die Ringnuten 20 in dem Planetenträger 2 und in dem axialen Schenkel des Einsatzringes 14 miteinander verbinden.

Wie in Fig. 4 weiterhin gezeigt ist, kann die Wand des radialen Schenkels 15 des Einsatzringes 14 von axialen Bohrungen 30 durchdrungen sein. Diese Bohrungen 30 gehen von dem Ölführungskanal 19 des Einsatzringes 14 aus und führen zu den seitlich von dem radialen Schenkel 15 vorgesehenen Lager 5 des Planetenträgers 2 und dem Lager 31 der Getriebewelle einer weiteren Übersetzungsstufe.

Mit Hilfe der Ölförderpumpe wird eine definierte Menge an Schmieröl über den Ölzulauf 18 in der Wand des Getriebegehäuses 1, den Ölführungskanal 19 im Einsatzring 14, die Ringnut 20 im Einsatzring 14 und/oder in der Seitenwange 6 des Planetenträgers 2, den Ölführungskanälen 21 des Planetenträgers 2, den Ölführungskanälen 23, 24, 25 der Achsen 10 der Planetenräder 8 zwangsweise und kontinuierlich zwischen die und durch die Planetenradlager 9 geführt. Die Planetenradlager 9 sind dadurch ständig von Schmieröl durchströmt, wodurch sie gleichzeitig geschmiert und durchspült werden. Das aus den Planetenradlagern 9 austretende Schmieröl sammelt sich im Ölsumpf am Boden des Getriebegehäuses 1. Aus dem Ölsumpf saugt die Ölförderpumpe das Schmieröl an und fördert es filtriert und gegebenenfalls gekühlt in das Getriebe zurück.

Der Spalt 17 mit einer definierten Spaltdicke und einer definierten Spaltlänge beidseitig von der Ringnut 20 ermöglicht den Transport des Schmieröls für die Planetenradlager 9 zwischen dem rotierenden Planetenträger 2 und dem nicht rotierenden Getriebegehäuse 1. Abhängig von der Spaltdicke, Spaltlänge, Viskosität und des anstehenden Druckes des Schmieröles in der Ringnut 20 wird ein geringer, berechenbarer Prozentsatz der Fördermenge im Ölsumpf lecken.

## Patentansprüche

1. Planetengetriebe mit einer in einem Getriebegehäuse (1) umlaufenden Planetenstufe für eine mit einem Rotor versehene Windkraftanlage, wobei die Planetenstufe aus einem Planetenträger (2), der zwei durch Stege (7) mit einander verbundene Seitenwangen (6) aufweist, und aus mehreren über Planetenradlager (9) in dem Planetenträger (2) gelagerten Planetenrädern (8) besteht, die einerseits mit einem zentralen Sonnenrad (12) und andererseits mit einem Hohlrad (11) in Eingriff stehen, wobei ein Ölführungskanal (19) an dem einen Ende mit einem mit einer Ölförderpumpe in Verbindung stehenden Ölzulauf (18) und an dem anderen Ende über eine Ringnut (20) mit mehreren durch eine der Seitenwangen (6) des Planetenträgers (2) hindurchgeführten Ölführungskanälen (21) in Verbindung steht, wobei die Ölführungskanäle (21) in der Seitenwange (6) des Planetenträgers (2) jeweils an der Berührungsfläche zwischen dem Planetenträger (2) und den Achsen (10) der Planetenräder (8) enden, und wobei durch die Achsen (10) aller Planetenräder (8) Ölführungskanäle (23, 24, 25) hindurchgeführt sind, die mit den Ölführungskanälen (21) in dem Planetenträger (2) in Verbindung stehen und die zu den Planetenradlagern (9) hin offen sind,
**dadurch gekennzeichnet, dass** der Planetenträger (2) mit dem Rotor und das Hohlrad (11) fest mit dem Getriebegehäuse (1) verbunden ist,
- dass der Ölzulauf (18) durch die Wand des Getriebegehäuses (1) hindurchgeführt ist,
- dass der Ölführungskanal (19) einen Einsatzring (14) durchdringt, der fest in dem Getriebegehäuse (1) angeordnet ist,
- dass der Einsatzring (14) L-förmig ausgebildet ist und einen radialen eingangsseitigen Schenkel (15) und einen axialen ausgangsseitigen Schenkel (16) aufweist,
- dass der axiale Schenkel (16) des Einsatzrings (14) der der Hohlwelle (3) des Planetengetriebes abgewandten Seitenwange (6) des Planetenträgers (2) gegenüber steht und mit dieser einen definierten radialen Spalt (17) bildet, und
- dass die Spaltdicke und Spaltlänge des Spalts (17) so definiert sind, dass beim Transport von Schmieröl für die Planetenradlager (9) zwischen dem Getriebegehäuse (1) und dem Planetenträger (2) nur ein geringer, berechenbarer Prozentsatz einer Fördermenge an Schmieröl in einen Ölsumpf des Planetengetriebes (1) leckt, während die Planetenradlager (9) in einer zwangsgeführten Schmierung permanent mit einer ausreichenden und bestimmbaren Menge an Schmieröl versorgt werden können.

2. Planetengetriebe nach Anspruch 1,
**dadurch gekennzeichnet, dass** die Ölführungskanäle (23, 24, 25) in der Achse (10) der Planetenräder (8) als ein axialer Kanal (24) mit mehreren radialen Kanälen (23, 25) ausgebildet ist, von denen einige Kanäle (23) mit dem jeweiligen Ölführungskanal(21) im Planetenträger (2) verbunden sind und die anderen Kanäle (25) zwischen den einzelnen Rollenreihen des als mehrreihiges Wälzlager ausgebildeten Planetenradlagers (9) enden.

3. Planetengetriebe nach einem der Ansprüche 1 oder 2,
**dadurch gekennzeichnet, dass** in dem radialen Schenkel (15) des Einsatzringes (14) axiale Bohrungen (30) angebracht sind, die von dem Ölführungskanal (19) ausgehen und zu Lagern (5, 31) seitlich des radialen Schenkels (15) führen.

4. Planetengetriebe nach einem der Ansprüche 1 bis 3,
**dadurch gekennzeichnet, dass** in der Seitenwange (6) des Planetenträgers (2) auf der dem axialen Schenkel (16) des Einsatzringes (14) zugewandten Seite eine Lagerbuchse (28) eingebracht ist, die mit radialen Bohrungen (29) versehen sind, die Ringnuten (20) in der Seitenwange (6) des Planetenträgers (2) und in dem Einsatzring (14) verbinden.

## Claims

1. Planetary transmission with a planet stage, rotating in a transmission housing (1), for a wind power plant provided with a rotor, the planet stage consisting of a planet carrier (2), which has two side cheeks (6) connected to one another by means of webs (7), and of a plurality of planet wheels (8) which are mounted via planet-wheel bearings (9) in the planet carrier (2) and are in engagement, on the one hand, with a central sunwheel (12) and, on the other hand, with a ring wheel (11), an oil guide duct (19) being connected at one end to an oil inflow (18) connected to an oil feed pump and being connected at the other end, via an annular groove (20), to a plurality of oil guide ducts (21) led through one of the side cheeks (6) of the planet carrier (2), the oil guide ducts (21) in the side cheek (6) of the planet carrier (2) terminating in each case at the contact surface between the planet carrier (2) and the axles (10) of the planet wheels (8), and oil guide ducts (23, 24, 25) being led through the axles (10) of all the planet wheels (8) and being connected to the oil guide ducts (21) in the planet carrier (2), and being open towards the planet-wheel bearings (9), **characterized in that** the planet carrier (2) is firmly connected to the rotor and the ring wheel (11) is firmly connected to the transmission housing (1),
- **in that** the oil inflow (18) is led through the wall of the transmission housing (1),
- **in that** the insert ring (14) is designed in L-shaped form and has a radial input-side leg (15) and an axial output-side leg (16),
- **in that** the oil guide duct (19) penetrates through an insert ring (14) which is arranged firmly in the transmission housing (1),
- **in that** the insert ring (14) is designed in L-shaped form and has a radial input-side leg (15) and an axial output-side leg (16),
- **in that** the axial leg (16) of the insert ring (14) is opposite the side cheek (6) of the planet carrier (2) which faces away from the hollow shaft (3) of the planetary transmission and forms a defined radial gap (17)
- **in that** the gap thickness and gap length of the gap (17) are defined such that when lubricating oil for the planet-wheel bearings (9) is transported between the transmission housing (1) and the planet carrier (2), only an insignificant calculatable percentage of a feed quantity of lubricating oil leaks into an oil sump of the planetary transmission (1), while the planet-wheel bearings (9) can be permanently supplied with a sufficient and determinable quantity of lubricating oil by forced-feed lubrication.

2. Planetary transmission according to Claim 1, **characterized in that** the oil guide ducts (23, 24, 25) in the axle (10) of the planet wheels (8) are designed as one axial duct (24) with a plurality of radial ducts (23, 25), of which some ducts (23) are connected to the respective oil guide duct (21) in the planet carrier (2) and the other ducts (25) terminate between the individual roller rows of the planet-wheel bearing (9) designed as a multiple-row rolling bearing.

3. Planetary transmission according to either of Claims 1 and 2, **characterized in that**, in the radial leg (15) of the insert ring (14), axial bores (30) are made, which emanate from the oil guide duct (19) and lead to bearings (5, 31) laterally with respect to the radial leg (15).

4. Planetary transmission according to one of Claims 1 to 3, **characterized in that** in the side cheek (6) of the planet carrier (2), on the side facing the axial leg (16) of the insert ring (14), a bearing bush (28) is introduced, which is provided with radial bores (29) which connect annular grooves (20) in the side cheek (6) of the planet carrier (2) and in the insert ring (14).

## Revendications

1. Engrenage planétaire ayant, pour une éolienne pourvue d'un rotor, un étage planétaire tournant dans un carter (1) d'engrenage, l'étage planétaire étant constitué d'une cage (2) de transmission planétaire, qui a deux joues (6) latérales reliées entre elles par des traverses (7), et de plusieurs roues (8) satellites qui sont montées dans la cage (2) de transmission planétaire par plusieurs paliers (9) de roues satellites et qui engrènent d'une part avec une roue (12) solaire centrale et d'autre part avec une couronne (11), un canal (19) de conduite d'huile étant en communication, à l'une des extrémités, avec une arrivée (18) d'huile communiquant avec une pompe d'alimentation en huile et, à l'autre extrémité, par une rainure (20) annulaire, avec plusieurs canaux (21) de conduite d'huile traversant l'une des joues (6) latérales de la cage (2) de transmission planétaire, les canaux (21) de conduite d'huile de la joue (6) latérale de la cage (2) de transmission planétaire se terminant respectivement à la surface de contact entre la cage (2) de transmission planétaire et les axes (10) des roues (8) satellites, des canaux (23, 24, 25) de conduite d'huile qui passent dans les axes (10) de toutes les roues (8) satellites, communiquant avec les canaux (21) de conduite d'huile de la cage (2) de transmission planétaire et débouchant sur les paliers (9) de roues satellites,
**caractérisé en ce que** la cage (2) de transmission planétaire, avec le rotor et la couronne (11), est reliée fixement au carter (1) de l'engrenage,
- **en ce que** l'arrivée (18) d'huile traverse la paroi du carter (1) de l'engrenage,
- **en ce que** le canal (19) de conduite d'huile traverse un anneau (14) d'insertion, qui est monté fixe dans le carter (1) de l'engrenage,
- **en ce que** l'anneau (14) d'insertion est en forme de L et a une branche (15) radiale du côté de l'entrée et une branche (16) axiale du côté de la sortie,
- **en ce que** la branche (16) axiale de l'anneau (14) d'insertion fait face à la joue (6) latérale, éloignée de l'arbre (3) creux de l'engrenage planétaire, de la cage (2) de transmission planétaire, et forme, avec celle-ci, un intervalle (17) radial défini et
- **en ce que** l'épaisseur de l'intervalle et la longueur de l'intervalle étant définies de manière à ce que, lors du transport de l'huile de lubrification des paliers (9) des roues satellites, entre le carter (1) de l'engrenage et la cage (2) de transmission planétaire, ne fuit qu'un pourcentage petit, calculable, d'une quantité véhiculée d'huile de lubrification dans un bassin de l'engrenage (1) planétaire, tandis que les paliers (9) de roues satellites peuvent être alimentés suivant un graissage forcé en permanence d'une quantité pouvant être déterminée d'huile de lubrification.

2. Engrenage planétaire suivant la revendication 1, **caractérisé en ce que** les canaux (23, 24, 25) de conduite d'huile sont constitués dans l'axe (10) des roues (8) satellites sous la forme d'un canal (24) axial ayant plusieurs canaux (23, 25) radiaux, dont certains (23) communiquent avec le canal (21) de guidage d'huile respectif de la cage (2) de transmission planétaire et les autres (25) se terminent entre les rangées individuelles de rouleaux du palier (9) de roue satellite constitué sous la forme d'un palier à rouleaux à plusieurs rangées.

3. Engrenage planétaire suivant l'une des revendications 1 ou 2, **caractérisé en ce que**, dans la branche (15) radiale de l'anneau (14) d'insertion, sont ménagés des trous (30) axiaux, qui partent du canal (19) de conduite d'huile et mènent au palier (5, 31) latéralement à la branche (15) radiale.

4. Engrenage planétaire suivant l'une des revendications 1 à 3, **caractérisé en ce que**, dans la joue (6) latérale de la cage (2) de transmission planétaire, est ménagé, du côté tourné vers la branche (16) axiale de l'anneau (14) d'insertion, un coussinet (28), qui est pourvu de trous (29) radiaux mettant en communication les rainures (20) annulaires de la joue (6) latérale de la cage (2) de transmission planétaire et de l'anneau (14) d'insertion.
